# EUROPEAN PATENT SPECIFICATION

(11) **EP 4 469 876 B1**
(45) Date of publication and mention of the grant of the patent: **11.03.2026**
(21) Application number: 23700336.3
(22) Date of filing: 09.01.2023
(51) Int. Cl.: A01B 69/00, A01B 69/04, B60W 60/00, G05D 1/00

(54) **OPERATIONAL PATH PLANNING**
BETRIEBSWEGEPLANUNG
PLANIFICATION DE LA TRAJECTOIRE OPÉRATIONNELLE

(30) Priority: 28.01.2022 GB 202201115
(43) Date of publication of application: 04.12.2024
(73) Proprietor: AGCO International GmbH, 8212 Neuhausen am Rheinfall (CH)
(72) Inventor: ZHOU, Kun, 8930 Randers (DK); NILSSON, René Søndergaard, 8930 Randers (DK); LAUSDAHL, Kenneth Guldbrandt, 8930 Randers (DK)
(74) Representative: AGCO Intellectual Property Department
(86) International application number: PCT/IB2023/050165
(87) International publication number: WO 2023/144636

(56) References cited:
- JP-A- 2017 204 061
- US-A1- 2015 241 879
- US-A1- 2019 239 416
- US-B2- 11 044 842

## Description

### CROSS-REFERENCE TO RELATED APPLICATIONS

Not applicable.

### FIELD

Embodiments of the present disclosure relate generally to systems and methods for determining an operational path for an agricultural machine in a working environment.

### BACKGROUND

It is known to perform path planning for agricultural operations in a working environment, such as a field or the like. This is often performed manually by the operator of machines working in the environment in an attempt to optimize the relevant agricultural operation in terms of efficiency and cost. More recently, systems are provided which may suggest operational paths to an operator based on the operational task, location of crop, field slope etc. however no complete solution has been provided which accounts for in-field variables such as obstacles and the like. Example solutions are provided in JP2017204061, which describes a route planning system which accounts for obstacles, US2015/241879A1, which describes a guidance system which uses on board sensors to identify and account for obstacles, and US11044842B, which describes a method for planning a path for machinery moving through an environment which accounts for contours.

It would be advantageous to provide a system (and associated method) which overcomes or at least partly mitigates one or more problems associated with the prior art systems.

### BRIEF SUMMARY

In an aspect of the invention there is provided a control system for planning an agricultural operation in a working environment, the control system comprising one or more controllers and being configured to: determine a boundary for the working environment; determine one or more characteristics of at least one obstacle within the
working environment; determine an operational path for an agricultural machine in dependence on the boundary for the working environment and the characteristic(s) of the obstacle(s); and generate and output a control signal for controlling one or more operational components associated with the agricultural machine in dependence on the determined operational path.

Advantageously, the present invention provides a system which accounts for obstacles within the working environment when planning an operational path through that environment. This may enable the system to efficiently handle such obstacles and prevent or reduce any overlap in passes by the machine, increasing the efficiency of the agricultural operation as a whole.

The one or more controllers may collectively comprise an input (e.g. an electronic input) for receiving one or more input signals. The one or more input signals may comprise data indicative of the boundary of the working environment, and/or the one or more characteristics of the obstacle(s). The one or more controllers may collectively comprise one or more processors (e.g. electronic processors) operable to execute computer readable instructions for controlling operational of the control system, for example, to determine the boundary and/or the one or more characteristics, and/or the operational path, The one or more processors may be operable to generate one or more control signals for controlling operation of the one or more operational components. The one or more controllers may collectively comprise an output (e.g. an electronic output) for outputting the one or more control signals.

In embodiments the control system may be configured to determine a base model for the operational path in dependence on the boundary only. This may consider the shape and size of the overall environment and determine therefrom one or more aspects of the operational path, such as a general heading for the machine within the working environment. The control system may be configured to determine one or more adjustments to the base model in dependence on the one or more obstacle characteristics. This may include determining one or more adjustments in dependence on the operational path according to the base model being intercepted by one or more obstacles.

In embodiments, the control system may be configured to determine one or more adjustments by dividing the operational path (according to the base model) at the location of the obstacle into a pre-obstacle section and a post-obstacle section. The one or more adjustments may comprise determining an obstacle operational path between the pre-obstacle section and post-obstacle sections of the operational path. The obstacle operational path may include a route which bypasses the obstacle, or a route which encompasses the obstacle, for example,

The control system may be configured to classify the at least one obstacle. The control system may be configured to classify the at least one obstacle in dependence on one or more of: the size of the obstacle(s); the shape of the obstacle(s); and a relative dimension with respect to direction of travel of the agricultural machine according to the base model for the operational path,

In ernbodiments, the control system is configured to determine a size of the at least one obstacle in a direction substantially perpendicular a travel direction for the machine operating in accordance with the base model for the operational path, In such embodiments, the control system may additionally be configured to determine an adjusted operational path for the machine which bypasses the obstacle in dependence on the determined size being less than a threshold parameter. Additionally or alternatively, the control system may be configured to determine an additional headland path about the obstacle in dependence on the determined size being greater than a threshold parameter. The threshold parameter may be dependent on the width of the agricultural machine, or the width of a component suitably coupled to the machine, e.g. a header or the like. The threshold parameter may be dependent on a turning radius of the machine.

The control system may be configured to define a boundary box about the or each obstacle, The boundary box may define one or more regions of the working environment not to be traversed by the agricultural machine. The boundary box(es) may generally follow an outline or edge of the obstacle(s) and in embodiments may be offset therefrom. The offset may be determined in dependence on a turning radius of the agricultural machine.

The one or more characteristics of the obstacle(s) comprises a distance between obstacle and the boundary. The control system is configured to compare the distance between the obstacle(s) and the boundary with a threshold distance, which is dependent on a working width of the agricultural machine. The working width may relate to a width of a header operatively coupled to the machine, for example, The control system may be configured to define a new boundary which encompasses the obstacle in dependence on the distance between obstacle and boundary being less than the threshold distance, and/or where obstacle crosses the boundary. The control system is configured to define an obstacle headland path about the obstacle which is truncated so as to reduce overlap between the obstacle headland path and a headland path associated with the boundary, in dependence on the distance between obstacle and boundary being greater than the threshold distance but less than double the threshold distance, The obstacle headland path may comprise an inner obstacle headland path and an outer obstacle headland path. The control system may be configured to truncate the outer obstacle headland path at the location of any intercept between the outer headland path and a headland path associated with the boundary.

The one or more characteristics of a first obstade may comprise a distance between the first obstacle and one or more further obstacles within the working environment The control system may be configured to compare the distance between the first obstacle and the one or more further obstacles with a threshold distance. The threshold distance may be dependent on a working width of the agricultural machine, such as a width of a header of (or operatively coupled to) the machine, In some embodiments, the control system may be configured, in dependence on the distance between the first obstacle and the one or more further obstacles being less than the threshold distance, to merge the first obstacle and the further obstacle(s). The control system may be configured to determine the operational path in dependence on one or more characteristics of the merged obstacle. Additionally or alternatively, the control system may be configured, In dependence on the distance between the first obstacle and the further obstacle(s) being greater than the threshold distance but less than double the threshold distance, to define a first obstacle headland path about the first obstacle and/or a further obstacle headland path about the further obstacle(s) which is truncated so as to reduce overlap between the first obstacle headland path and the further obstacle headland path.

In embodiments, the control system may be configured to retrieve obstacle data indicative of the one or more characteristic(s) of the obstacle from a database comprising mapped information of the working environment. Additionally or alternatively, the control system may be configured to receive obstacle data from a sensing system associated with the machine and/or or more additional machines operating within the working environment. The control system may be configured to determine the one or more characteristics of the at least one obstacle in dependence of the retrieved and/or received data.

The control system may be configured to present the determined operational path to an operator of the agricultural machine. The determined operational path may be presented on a display screen associated with the machine. Additionally or alternatively, the determined operational path may be presented on a remote device, such as a phone or tablet, for example.

The one or more operational components associated with the agricultural machine may comprise a steering system of the agricultural machine. The one or more operational components may comprise a propulsion system of the agricultural machine. In this way, the control system may be configured for automating motion of the machine along the determined operational path through control of the steering and/or propulsion systems.

There is provided a guidance system for an agricultural machine, the guidance system comprising and/or being controllable by a control system as described hereinabove.

There is provided an agricultural machine comprising the control system and/or the guidance system of any preceding aspect,

The agricultural machine may comprise a tractor or a harvesting machine. The agricultural machine may comprise a combine harvester or a forage harvester, for example,

There is provided a method of planning an agricultural operation in a working environment, comprising: determining a boundary for the working environment; determining one or more characteristics of at least one obstacle within the working environment; determining an operational path for an agricultural machine in dependence on the boundary for the working environment and the characteristic(s) of the obstacle(s); and controlling one or more operational components associated with the agricultural machine in dependence on the determined operational path.

The method may comprise performing any one or more of the functionalities of the control system described hereinabove.

There is provided computer software comprising computer readable instructions which, when executed by one or more electronic processors, causes performance of a method in accordance with any aspect described herein.

There is provided a computer readable medium having the computer software of the preceding aspect of the invention stored thereon.

Within the scope of this application it should be understood that the various aspects, embodiments, examples and alternatives set out herein, and individual features thereof may be taken independently, as long as they fall within the scope of the appended claims. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the invention / disclosure will now be described, by way of example only, with reference to the accompanying drawings, in which:
FIG. 1 is a schematic view of a control system;
FIG. 2 is a schematic view illustrating aspects of the present invention;
FIG. 3 is a flowchart illustrating an embodiment of a method of the present invention;
FIGs. 4 - 10 are a series of schematic views illustrating the operational use of aspects of the present invention.

### DETAILED DESCRIPTION

The present invention, in general, relates to systems and methods for planning an agricultural operation in a working environment. As discussed herein, both a boundary for the working environment and one or more characteristics of at least one obstacle within the working environment are determined. An operational path for an agricultural machine is determined in dependence on the boundary for the working environment and the characteristic(s) of the obstacle(s). One or more operational components associated with the agricultural machine are then controlled in dependence on the determined operational path.

### Control system

As discussed herein, a control system 1 is configured for controlling one or more operational components 32, 35 associated with an agricultural machine 50, such as a combine harvester or tractor or the like. In the illustrated embodiment, the controllable operational components include a guidance system 35 of a harvester 50 for controlling motion of the harvester along a determined operational path, determined in the manner discussed herein, and a user interface 32 associated with the combine harvester 50, e.g. provided as a display terminal of the harvester 50 or indeed a handheld terminal, to provide an indication of the determined operational path for the harvester 50,

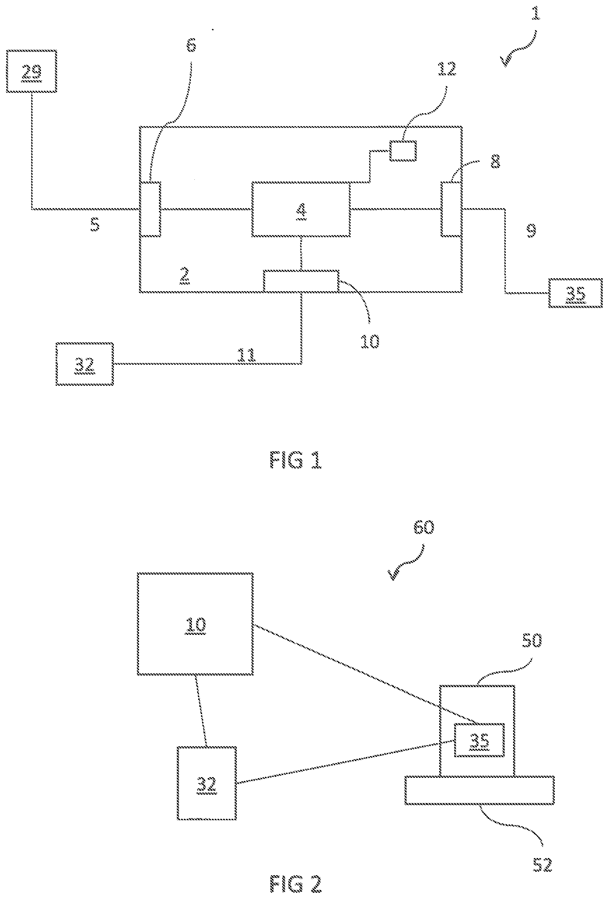

FIG 1 illustrates the control system 1 further. As shown, control system 1 comprises a controller 2 having an electronic processor 4, an electronic input 6 and electronic outputs 8, 10. The processor 4 is operable to access a memory 12 of the controller 2 and execute instructions stored therein to perform the steps and functionality of the present invention discussed herein, e.g. by controlling the user interface 32, to indicate, e.g. to an operator of the harvester 50, information indicative of the determined operational path, and/or controlling operation of the harvester 50 through generation and output of one or more control signals to a guidance system 35 thereof.

The processor 4 is operable to receive via input 6 which, in the illustrated embodiment, takes the form of input signals 5 received from a remote server 29, data indicative of a boundary for a working environment for the harvester 59 and data indicative of one or more characteristics of obstacle(s) within that environment. For instance, the server 19 can have stored therein mapped data of the environment which may, for example, be updated periodically through use of sensing systems on machines operating within that environment. In a variant, the harvester 50 may include one or more sensing systems and the control system 1 may include an electronic input configured to receive sensor data from said systems.

Utilising the data from the server 29, the processor 4 is configured to analyse the data and determine therefrom an operational path for the harvester 50 in dependence on the boundary and the one or more characteristics of obstacle(s) within the environment. The one or more characteristics include a size and/or shape of the obstacle, e.g. with reference to a driving direction of the machine and/or with respect to a working width of the machine.

As described above, the controller 2 includes an electronic output *8* configured to output control signals 9 generated by the processor 4 for controlling operation of the harvester 50. Specifically, processor 4 is operable to generate, and the controller 2 operable to then output via output 8, control signals 9 to a guidance system 35 of the harvester 50 for controlling motion of the harvester 50, e.g. through control over a steering system and/or a propulsion system of the harvester 50, for controlling motion of the harvester 50 along the determined operational path. As will be appreciated, the controller 2 may output the control signals 9 to a local processing unit, e.g. a control unit of the guidance system 35 for controlling operation thereof.

Output 10 is operably coupled to a user interface 32 associated with the harvester 50. As will be appreciated and is discussed herein, the user interface 32 may form part of a portable device, such as a phone or tablet computer, and/or may form part of a display screen within an operator cab of the harvester 50. Here, the control system 1 is operable to control operation of the user interface 32, e.g. through output of control signals 11 in order to display data to an operator of the harvester 50 relating to the operation of the control system 1. Specifically, the control system 1 is operable to control the user interface 32 to display to the operator an indicator of determined operational path, e.g. for the operator to use to then control motion of the harvester 50 along that path, or indeed to monitor automated operation thereof.

### System

FIG.2 illustrates a system 60 embodying aspects of the invention. The system 60 comprises a distributed system with control system 1 (discussed hereinabove) shown remote from but in communication with the user interface 32 and harvester 50. In this embodiment, the remote control system 1 may be housed on a remote server or cloud based system and operable to communicate with the user interface 32 and/or harvester 50 over a wireless communication network. In alternative arrangements, the control system 1 may form part of the processing system(s) of the harvester 50 itself, Further, as described herein, the user interface 32 may form part of a display system of the harvester 50.

### Method

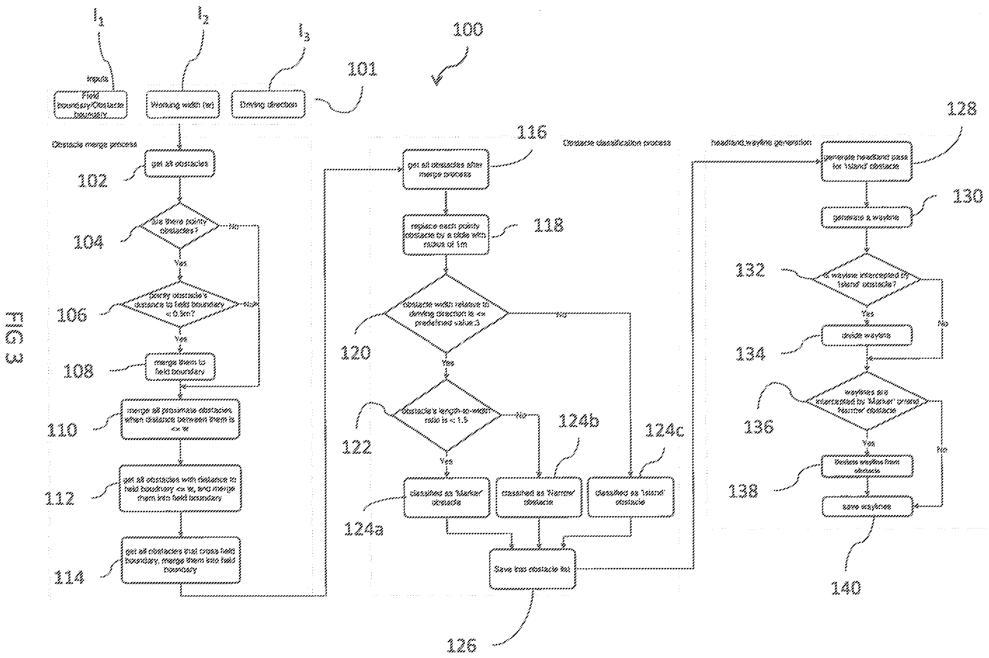

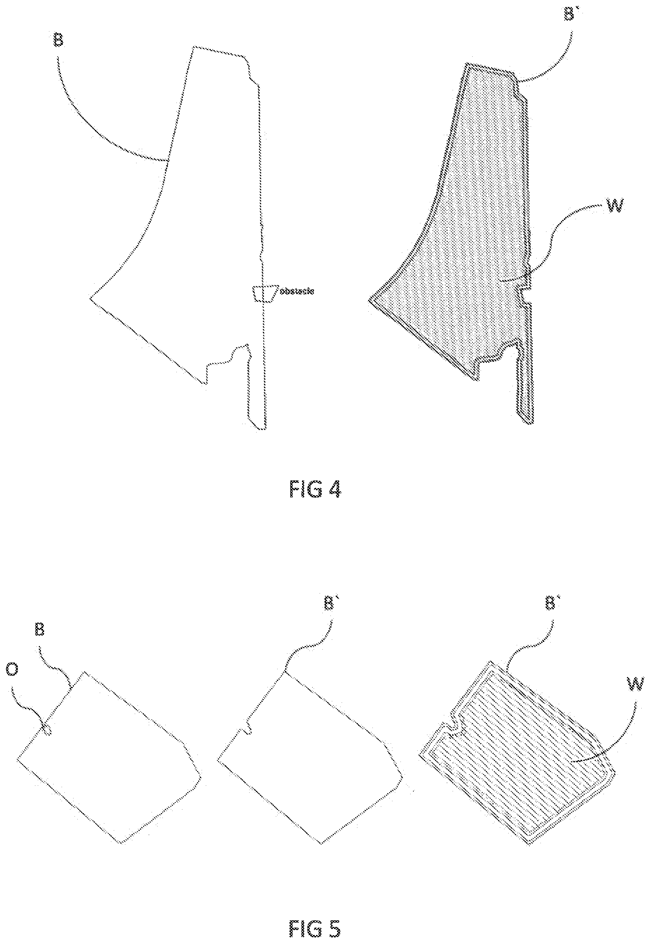

FIG. 3 illustrates a method 100 embodying multiple aspects of the present invention, which will be described herein with reference to FIGs 4-9, also,

In an initial step 101, inputs are provided relating to the boundary of the working environment and obstacle data indicative of the boundary of obstacle(s) within the environment I₁, data relating to the working width of the harvester 50 I₂, here comprising the width of a header 52 operatively coupled to the harvester 50, and data relating to a driving direction for the harvester 50 in the field. This may be predetermined, or may be determined, e.g. by the control system 1 based on the shape of the environment, for example,

At step 102, data relating to the one or more characteristics of each obstacle within the environment is assessed to determine the number of obstacles to be analyzed in determination of the operational path,

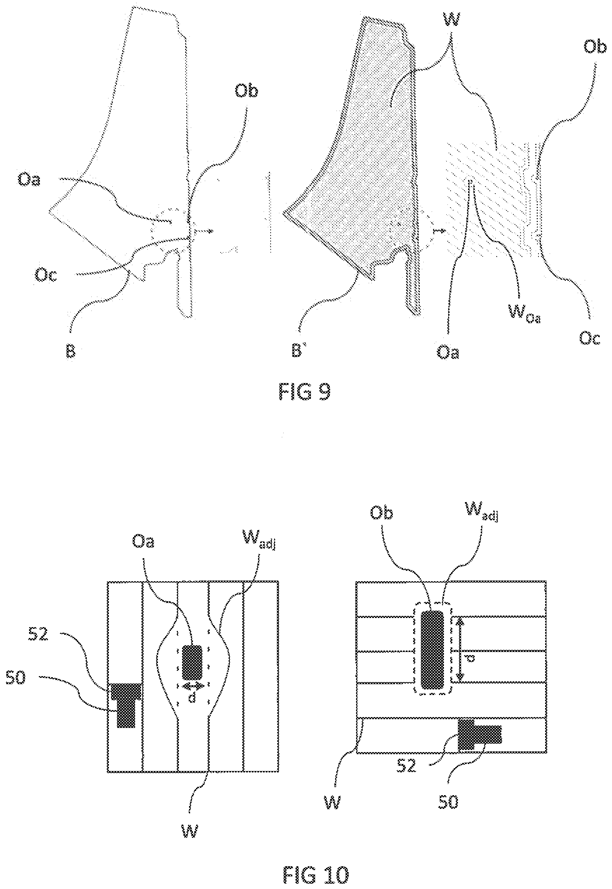

At step 104, the data for each of the obstacles is analysed to determine therefrom whether any of the obstacles are "point" obstacles. That is, any obstacles which can effectively be treated as a point object in the environment, and may include trees, electricity poles and the like. For those obstacles which satisfy this condition a further check is made to determine whether the point obstacles are close to the field boundary (step 106). Here, a check is made to see whether any point obstacles are within 0.5m of the field boundary, however the skilled person would appreciate that this threshold distance may be different in different scenarios, and relates primarily to the working width of the machine operating in the environment. Where point obstacles are determined to lie proximate to the field boundary they are effectively merged with the existing boundary to form a new boundary for the working environment. This is illustrated figuratively in FIG. 9, where point obstacles Ob and Oc are identified as proximate to field boundary B. Here, a new field boundary B' is determined which involves merging the old field boundary B with the positions of obstacles Ob and Oc. As discussed herein, waylines W for an operational path for the harvester 50 are then determined based on the new field boundary B'.

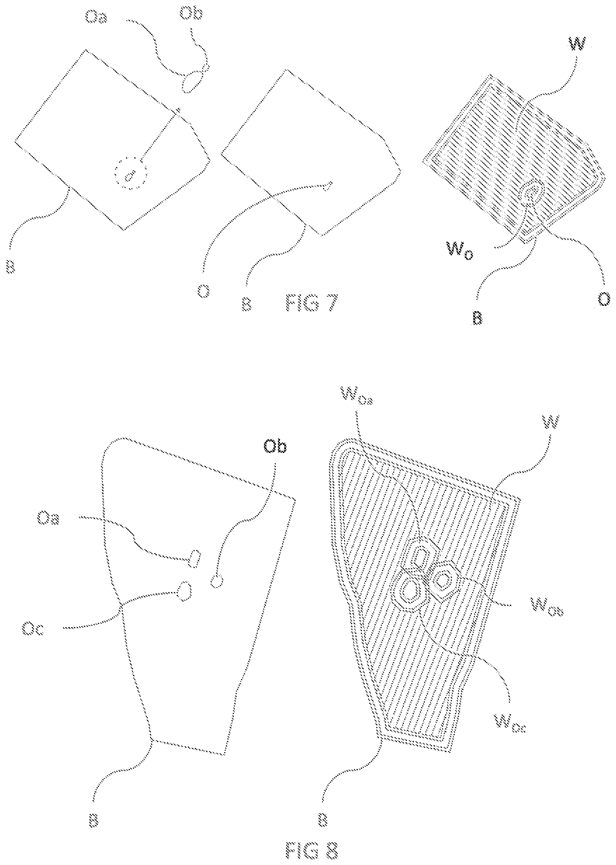

The method then progresses to step 110 where a further check is performed to consider how close adjacent obstacles are to one another, irrespective of any classification of obstacle type, In the illustrated embodiment, this comprises checking the distance between each of the obstacles against a threshold distance equal to the working width of the harvester 50. As discussed above, this is dependent on the width of the header 52. For those which are less than or equal to the working width of the harvester 50, these obstacles are merged to form a single obstacle (for consideration by the control system 1). This is illustrated figuratively in FIG. 7, where obstacles Oa and Ob are identified as proximate to one another, i.e. at a distance which is less than or equal to the working width of the harvester 50. Here, a new obstacle O is defined encompassing both obstacle Oa and obstacle Ob. Again, as discussed herein, waylines W for an operational path for the harvester 50 are then determined with knowledge of the newly defined obstacle O. in short, a global set of waylines W is determined for the environment as a whole, with a set of obstacle specific waylines Wₒ determined for the newly defined obstacle. The global set of waylines W and the obstacle specific waylines Wₒ define the operational path for the harvester 50.

Turning back to FIG 3, the method progresses to step 112 where a further check is performed to consider how close the remaining obstacles are to the boundary of the working environment. In the illustrated embodiment, this comprises checking the distance between each of the remaining obstacles against a threshold distance equal to the working width of the harvester 50. As discussed above, this is dependent on the width of the header 52. For those which are positioned at a distance which is less than or equal to the working width of the harvester 50, they are merged into the boundary. This is illustrated figuratively in FIG 5, where an obstacle O is identified as proximate to field boundary B. Here, a new field boundary B' is determined which involves merging the old field boundary B with the positions of obstacle O. As discussed herein, waylines W for an operational path for the harvester 50 are then determined based on the new field boundary B',

As a next step, a check is made for any obstacles which cross the boundary of the working environment (step 114). For those which cross the boundary of the working environment, they are merged into the boundary, This is illustrated figuratively in FIG 4, where an obstacle O is identified as crossing the field boundary B. Here, a new field boundary B' is determined which involves merging the old field boundary B with the position of obstacle O. As discussed herein, waylines W for an operational path for the harvester 50 are then determined based on the new field boundary B'.

At step 116 a list of all obstacles is obtained following the various merge processes. For instance, those which have been merged into the boundary are no longer considered as obstacles but rather now define the boundary. Obstacles which have been merged with one another are considered single obstacles, etc. At step 118 each of the remaining point obstacles are replaced (from the point of view of the control system 1) with circles of radius 1m. Again, the skilled person will appreciate that this is simply shown as an example. This circle defines a region around the point obstaclels) where the machine cannot traverse and prevents waylines being generated for the operational path which pass through or close to said point obstacles at risk of a collision.

At step 120 the width of the remaining obstacles is determined with respect to the driving direction of the harvester 50. This is compared with a predetermined threshold value. Where this width is greater than the predetermined threshold value, the obstacle is classified as an "island" obstacle and handled in the manner discussed hereinbelow (step 128, discussed below). For those which are less than or equal to the predetermined threshold value a further check is performed (step 122) relating to the obstacle's length to width ratio, and comparison of that ratio with a further threshold value for further classification of the obstacle. Here, the ratio threshold is set at 1.5, and obstacles where the length-to-width ratio is less than 1.5 are classified as "marker" obstacles, and those which have a length to width greater than 1.5 are classified as "narrow" obstacles. Both marker and narrow obstacles are handled similarly to point obstacles as discussed herein, and below with reference to steps 136 and 138.

This is illustrated figuratively in FIG 10, showing harvester 50 with header 52 operating within an environment. Here, an obstacle Oa is identified as a narrow obstacle with a width, d, which is less than the threshold value (as determined with respect to the width of the header 52). Here, it is possible to simply deviate the waylines W of the operational path (W_{adj}) to pass the obstacle Oa without needing to generate obstacle specific waylines (see below). On the other hand, obstacle Ob has a width which is greater than the threshold and hence is classified as an island obstacle. Here, additional waylines W_{adj} need to be generated about the obstacle (again, see below),

Turning back to FIG. 3, the classification of the obstacles is saved into an obstacle list at step 126.

Step 128 comprises generating headland "passes" for each of the obstacles classified as "island" obstacles. In practice, this comprises generating obstacle specific headland paths around the island obstacles. This is shown figuratively in FIG. 8, where for each of obstacles Oa, Ob, Oc, obstacle specific headland paths W_{Oa}, W_{Ob}, W_{Oc} are determined and provided as part of the operational path along with global waylines W for the working environment, Here, the obstacle specific headland paths comprise a pair of corcentric, paths about each obstacle comprised of an inner path and an outer path, as will be appreciated,

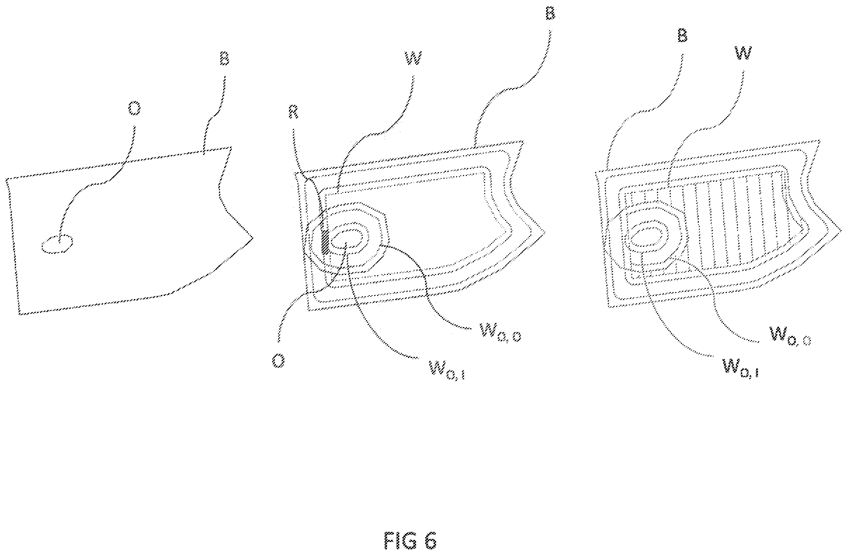

As shown in FIGs. 6 & 8, it is possible that with obstacles which are proximate to one another, and/or where obstacles are proximate to the field boundary (but at a distance which is greater than the working width of the machine) there may be overlap in the obstacle specific headland paths or indeed between the obstacle headland paths and the headland path about the boundary of the working environment. Accordingly, in an extension of the method 100, the operational path associated with an obstacle specific headland path may be truncated at any location where that path crosses a further headland path as defined by the overall operational path for the harvester 50. This is shown figuratively in FIG. 6, where obstacle O is identified and an obstacle headland path W_{O} is defined thereabout, Here, this includes an inner headland path W_{O,I} and an outer headland path W_{O,O} effectively defining concentric rings about the obstacle O. In this Instance the distance between the obstacle O and the boundary B is greater than the working width of the harvester 50, but less than twice the working width of the harvester 50 and as such the outer headland path W_{O,O}, intercepts the headland path W associated with the boundary B. To reduce overlap, and hence increase efficiency of the subsequent operation by the harvester 50 following the determined operational path, the present invention redefines the headland path about the obstacle O by truncating the outer headland path W_{O,O} between the points at which is intersects the boundary headland path W.

At step 130, a base model for the operational path is determined consisting of the generation of waylines for the environment as a whole. As described herein, this may be determined primarily on the overall shape and size of the environment, and may be predetermined from a desired driving direction through the environment. The base model is then adjusted to account for the characteristics of the identified obstacles and the additional headland paths, boundary adjustments etc. discussed above.

For instance, at step 132, a check is made to consider whether the generated waylines for the environment are intercepted by any "island" obstacles (and the obstacle specific headland paths associated with those obstacles, determined in the manner discussed hereinabove). If so, each intercepted wayline is divided (step 134) into a pre-obstacle portion and a post obstacle portion to remove any overlap.

At step 136, a check is made to consider whether the generated waylines for the environment are intercepted by any "narrow" or "marker" obstacles, determined in the manner discussed hereinabove. If so, each intercepted wayline is deviated to an extent such that the harvester 50 may bypass the obstacle(s) (step 138) but without needing to divide the wayline entirely - see FIG 10,

At step 140, the waylines (and any adjustments made thereto) are saved in a location accessible by the control system 1. The saved waylines define an overall operational path for the harvester 50 through the environment as determined with reference to both the boundary of the environment and one or more characteristics of obstacles within the environment,

The method may then extend to generating and outputting control signals for controlling operation of one or more operational components associated with the harvester 50. As discussed herein, this can include controlling operation of a user interface 32 for displaying to an operator the determined operational path. This may be used by the operator to manually control the movement of the harvester 50 along the determined path, or may be used in a supervisory role monitoring operation of the harvester 50, e.g. where the harvester is being operated by another person and/or automated to some extent. in some variants, the method extends to at least partially automating motion of the harvester 50 along the determined operational path. As discussed herein, this may involve controlling a guidance system for the harvester, a steering system of the harvester and/or a propulsion system of the harvester, as will be appreciated.

## Claims

1. A control system (1) for planning an agricultural operation in a working environment, the control system (1) comprising one or more controllers (2) and being configured to:
determine a boundary (B) for the working environment;
determine one or more characteristics of at least one obstacle (O) within the working environment;
determine an operational path for an agricultural machine (50) in dependence on the boundary (B) for the working environment and the characteristic(s) of the obstacle(s) (O); and
generate and output a control signal (9, 11) for controlling one or more operational components (32, 35) associated with the agricultural machine (50) in dependence on the determined operational path;
wherein the one or more characteristics of the obstacle(s) (O) comprises a distance between obstacle (O) and the boundary (B); and
wherein the control system (1) is configured to:
compare the distance between the obstacle(s) (O) and the boundary (B) with a threshold distance which is dependent on a working width of the agricultural machine (50);
**characterised in that** the control system is further configured to: define an obstacle headland path about the obstacle (O) which is truncated so as to reduce overlap between the obstacle headland path and a headland path associated with the boundary (B), in dependence on the distance between obstacle (O) and boundary (B) being greater than the threshold distance but less than double the threshold distance.

2. A control system (1) as claimed in claim 1, configured to determine a base model for the operational path in dependence on the boundary (B) only; and determine one or more adjustments to the base model in dependence on the one or more obstacle characteristics.

3. A control system (1) as claimed in claim 2, configured to determine the one or more adjustments in dependence on the operational path according to the base model being intercepted by one or more obstacles (O); optionally wherein the one or more adjustments comprise dividing the operational path at the location of the obstacle (O) into a pre-obstacle section and a post-obstacle section; optionally where the one or more adjustments comprise determining an obstacle operational path between the pre-obstacle section and post-obstacle sections of the operational path.

4. A control system (1) as claimed in any preceding claim, configured to classify the at least one obstacle (O) in dependence on one or more of: the size of the obstacle(s); the shape of the obstacle(s); and a relative dimension with respect to direction of travel of the agricultural machine (50) according to the base model for the operational path.

5. A control system (1) as claimed in any preceding claim, configured to determine a size of the at least one obstacle (O) in a direction substantially perpendicular a travel direction for the machine (50) operating in accordance with the base model for the operational path; optionally wherein the control system (1) is configured to determine an adjusted operational path for the machine (50) which bypasses the obstacle (O) in dependence on the determined size being less than a threshold parameter.

6. A control system (1) as claimed in claim 5, configured to determine an additional headland path about the obstacle (O) in dependence on the determined size being greater than a threshold parameter.

7. A control system (1) as claimed in any preceding claim, configured to define a boundary box about the or each obstacle (O) defining region(s) of the working environment not to be traversed by the agricultural machine (50).

8. A control system (1) as claimed in any preceding claim, wherein the obstacle headland path comprises an inner obstacle headland path and an outer obstacle headland path, and the control system (1) is configured to truncate the outer obstacle headland path at the location of any intercept between the outer headland path and a headland path associated with the boundary (B).

9. A control system (1) of any preceding claim, wherein the one or more characteristics of a first obstacle (O) comprises a distance between the first obstacle and one or more further obstacles within the working environment.

10. A control system (1) as claimed in claim 9, configured to compare the distance between the first obstacle (O) and the one or more further obstacles with a threshold distance, the threshold distance being dependent on a working width of the agricultural machine (50).

11. A control system (1) as claimed in claim 10, configured, in dependence on the distance between the first obstacle (O) and the one or more further obstacles being less than the threshold distance, to merge the first obstacle and the further obstacle(s); and determine the operational path in dependence on one or more characteristics of the merged obstacle.

12. A control system (1) as claimed in claim 10 or claim 11, configured, in dependence on the distance between the first obstacle and the further obstacle(s) being greater than the threshold distance but less than double the threshold distance, to define a first obstacle headland path about the first obstacle and/or a further obstacle headland path about the further obstacle(s) which is truncated so as to reduce overlap between the first obstacle headland path and the further obstacle headland path.

13. A control system (1) as claimed in any preceding claim, configured to:
retrieve obstacle data indicative of the one or more characteristic(s) of the obstacle from a database comprising mapped information of the working environment; and/or
receive obstacle data from a sensing system associated with the machine and/or or more additional machines operating within the working environment; and
determine the one or more characteristics of the at least one obstacle (O) in dependence thereon.

14. A control system (1) as claimed in any preceding claim, configured to present the determined operational path to an operator of the agricultural machine (50); wherein the determined operational path is presented:
on a display screen (32) associated with the machine; and/or
on a remote device.

15. A control system (1) as claimed in any preceding claim, wherein the one or more operational components associated with the agricultural machine comprises a steering system and/or propulsion system of the machine for automating motion of the machine along the determined operational path.

## Patentansprüche

1. Steuersystem (1) für eine Planung eines landwirtschaftlichen Betriebs in einer Arbeitsumgebung, wobei das Steuersystem (1) mindestens einen Controller (2) aufweist und konfiguriert ist für:
ein Ermitteln einer Grenze (B) der Arbeitsumgebung;
ein Ermitteln mindestens einer Charakteristik mindestens einen Hindernisses (O) in der Arbeitsumgebung;
ein Ermitteln eines Betriebspfads einer landwirtschaftlichen Maschine (50) in Abhängigkeit von der Grenze (B) der Arbeitsumgebung und der mindestens einen Charakteristik des mindestens einen Hindernisses (O); und
ein Erzeugen und Ausgeben eines Steuersignals (9, 11) zum Steuern mindestens einer Betriebskomponente (32, 35), die der landwirtschaftlichen Maschine (50) zugeordnet ist, in Abhängigkeit von dem ermittelten Betriebspfad;
wobei die mindestens eine Charakteristik des mindestens einen Hindernisses (O) einen Abstand zwischen dem Hindernis (O) und der Grenze (B) aufweist; und
wobei das Steuersystem (1) konfiguriert ist für
ein Vergleichen des Abstands zwischen dem mindestens einen Hindernis (O) und der Grenze (B) mit einem Schwellwert-Abstand, der abhängig ist von einer Arbeitsbreite der landwirtschaftlichen Maschine (50);
**dadurch gekennzeichnet, dass** das Steuersystem des Weiteren konfiguriert ist für
ein Festlegen eines Hindernis-Ackerrandbereich-Pfads um das Hindernis (O), der abgekürzt ist zur Verringerung der Überlappung zwischen dem Hindernis-Ackerrandbereich-Pfad und dem Ackerrandbereich-Pfad, der der Grenze (B) zugeordnet ist, in Abhängigkeit davon, ob der Abstand zwischen dem Hindernis (O) und der Grenze (B) größer ist als der Schwellwert-Abstand, aber kleiner als das Doppelte des Schwellwert-Abstands.

2. Steuersystem (1) nach Anspruch 1, welches konfiguriert ist für eine Ermittlung eines Basismodells für den Betriebspfad in Abhängigkeit ausschließlich von der Grenze (B) und für ein Ermitteln mindestens einer Anpassung des Basismodells in Abhängigkeit von der mindestens einen Charakteristik des mindestens einen Hindernisses.

3. Steuersystem (1) nach Anspruch 2, welches konfiguriert ist zur Ermittlung der mindestens einen Anpassung in Abhängigkeit davon, ob der Betriebspfad entsprechend dem Basismodell abgeschnitten ist durch mindestens ein Hindernis (O), wobei vorzugsweise die mindestens eine Anpassung ein Unterteilen des Betriebspfads an dem Ort des Hindernisses (O) in einen Vor-Hindernis-Abschnitt und einen Nach-Hindernis-Abschnitt aufweist, wobei vorzugsweise mindestens eine Anpassung eine Ermittlung eines Hindernis-Betriebspfads zwischen dem Vor-Hindernis-Abschnitt und dem Nach-Hindernis-Abschnitt des Betriebspfads aufweist.

4. Steuersystem (1) nach einem der vorhergehenden Ansprüche, welches konfiguriert ist für ein Klassifizieren des mindestens einen Hindernisses (O) in Abhängigkeit von der Größe des mindestens einen Hindernisses und/oder der Form des mindestens einen Hindernisses und/oder einer relativen Dimension gegenüber der Fahrtrichtung der landwirtschaftlichen Maschine (50) entsprechend dem Basismodell für den Betriebspfad.

5. Steuersystem (1) nach einem der vorhergehenden Ansprüche, welches konfiguriert ist für eine Ermittlung einer Größe des mindestens einen Hindernisses (O) in eine Richtung im Wesentlichen senkrecht zu einer Fahrtrichtung der Maschine (50), die entsprechend dem Basismodell für den Betriebspfad betrieben wird, wobei vorzugsweise das Steuersystem (1) konfiguriert ist für ein Ermitteln eines angepassten Betriebspfads der Maschine (50), der das Hindernis (O) umgeht, in Abhängigkeit davon, dass die ermittelte Größe kleiner ist als ein Schwellwert-Parameter.

6. Steuersystem (1) nach Anspruch 5, welches konfiguriert ist zur Ermittlung eines zusätzlichen Ackerrandbereich-Pfads um das Hindernis (O) in Abhängigkeit davon, dass die ermittelte Größe größer ist als ein Schwellwert-Parameter.

7. Steuersystem (1) nach einem der vorhergehenden Ansprüche, welches konfiguriert ist zur Festlegung einer Grenzbox um das oder jedes Hindernis (O) mit der Festlegung mindestens einer Region der Arbeitsumgebung, die nicht von der landwirtschaftlichen Maschine (50) überfahren werden darf.

8. Steuersystem (1) nach einem der vorhergehenden Ansprüche, wobei der Hindernis-Ackerrandbereich-Pfad einen inneren Hindernis-Ackerrandbereich-Pfad und einen äußeren Hindernis-Ackerrandbereich-Pfad aufweist und das Steuersystem (1) konfiguriert ist zum Abkürzen des äußeren Hindernis-Ackerrandbereich-Pfads an dem Ort eines Schnittpunkts zwischen dem äußeren Ackerrandbereich-Pfad und einem Ackerrandbereich-Pfad, der der Grenze (B) zugeordnet ist.

9. Steuersystem (1) nach einem der vorhergehenden Ansprüche, wobei die mindestens eine Charakteristik des ersten Hindernisses (O) einen Abstand zwischen dem ersten Hindernis und mindestens einem weiteren Hindernis innerhalb der Arbeitsumgebung aufweist.

10. Steuersystem (1) nach Anspruch 9, welches konfiguriert ist zum Vergleich des Abstands zwischen dem ersten Hindernis (O) und mindestens einem weiteren Hindernis mit einem Schwellwert-Abstand, wobei der Schwellwert-Abstand abhängig ist von einer Arbeitsbreite der landwirtschaftlichen Maschine (50).

11. Steuersystem (1) nach Anspruch 10, welches konfiguriert ist, um in Abhängigkeit davon, dass der Abstand zwischen dem ersten Hindernis (O) und dem mindestens einen weiteren Hindernis kleiner ist als der Schwellwert-Abstand, das erste Hindernis und das mindestens eine weitere Hindernis zusammenzufassen und den Betriebspfad in Abhängigkeit von mindestens einer Charakteristik des zusammengefassten Hindernisses zu ermitteln.

12. Steuersystem (1) nach Anspruch 10 oder 11, welches konfiguriert ist, um in Abhängigkeit davon, dass der Abstand zwischen dem ersten Hindernis und dem mindestens einen weiteren Hindernis größer ist als der Schwellwert-Abstand, aber kleiner ist als das Doppelte des Schwellwert-Abstands, einen ersten Hindernis-Ackerrandbereich-Pfad um das erste Hindernis und/oder einen weiteren Hindernis-Ackerrandbereich-Pfad um das mindestens eine weitere Hindernis vorzugeben, welcher abgeschnitten ist zwecks Reduzierung der Überlappung zwischen dem ersten Hindernis-Ackerrandbereich-Pfad und dem weiteren Hindernis-Ackerrandbereich-Pfad.

13. Steuersystem (1) nach einem der vorhergehenden Ansprüche, welches konfiguriert ist für
ein Gewinnen von Hindernis-Daten, die die mindestens eine Charakteristik des Hindernisses indizieren, aus einer Datenbank, die kartierte Informationen der Arbeitsumgebung aufweist; und/oder
ein Empfangen von Hindernis-Daten von einem Sensorsystem, welches der Maschine zugeordnet ist, und/oder von zusätzlichen Maschinen, die in der Arbeitsumgebung betrieben werden, und/oder von einem Sensorsystem, welches zusätzlichen Maschinen, die in der Arbeitsumgebung betrieben werden, zugeordnet ist; und
ein Ermitteln mindestens einer Charakteristik des mindestens einen Hindernisses in Abhängigkeit hiervon.

14. Steuersystem (1) nach einem der vorhergehenden Ansprüche, welches konfiguriert ist für eine Darstellung des ermittelten Betriebspfads für einen Betreiber der landwirtschaftlichen Maschine (50), wobei der ermittelte Betriebspfad dargestellt wird:
an einem Anzeigebildschirm (32), der der Maschine zugeordnet ist; und/oder
an einer beabstandet angeordneten Einrichtung oder Fernsteuereinrichtung.

15. Steuersystem (1) nach einem der vorhergehenden Ansprüche, wobei die mindestens eine Betriebskomponente, die der landwirtschaftlichen Maschine zugeordnet ist, ein Lenksystem und/oder ein Antriebssystem der Maschine für eine automatische Bewegung der Maschine entlang des vorbestimmten Betriebspfads aufweist.

## Revendications

1. Dispositif de commande (1) destiné à programmer une opération agricole dans un environnement de travail, le dispositif de commande (1) comprenant une ou plusieurs unités de commande (2) et étant configuré de manière à :
déterminer une limite (B) de l'environnement de travail ;
déterminer une ou plusieurs caractéristiques d'au moins un obstacle (O) à l'intérieur de l'environnement de travail ;
déterminer un trajet opérationnel pour une machine agricole (50) en fonction de la limite (B) de l'environnement de travail et de la ou des caractéristiques de l'obstacle ou des obstacles (O) ; et
à produire et à délivrer un signal de commande (9, 11) afin de commander un ou plusieurs composants opérationnels (32, 35) associés à la machine agricole (50) en fonction du trajet opérationnel déterminé ;
dans lequel la ou les caractéristiques de l'obstacle ou des obstacles (O) comprennent une distance entre un obstacle (O) et la limite (B) ; et
dans lequel le dispositif de commande (1) est configuré de manière à :
comparer la distance entre les obstacles (O) et la limite (B) à une distance de seuil qui dépend d'une largeur de travail de la machine agricole (50) ;
**caractérisé en ce que** le dispositif de commande est, en outre, configuré de manière à :
définir un trajet de contournement d'obstacle autour de l'obstacle (O) qui est tronqué afin de réduire le recouvrement entre le trajet de contournement d'obstacle et un trajet de contournement associé à la limite (B), en fonction du fait que la distance entre l'obstacle (O) et la limite (B) est supérieure à la distance de seuil mais inférieure au double de la distance de seuil.

2. Dispositif de commande (1) selon la revendication 1, configuré de manière à déterminer un modèle de base du trajet opérationnel uniquement en fonction de la limite (B) ; et à déterminer un ou plusieurs réglages du modèle de base en fonction de la ou des caractéristiques d'obstacle.

3. Dispositif de commande (1) selon la revendication 2, configuré de manière à déterminer le ou les réglages en fonction du trajet opérationnel selon le modèle de base qui est intercepté par un ou plusieurs obstacles (O) ; dans lequel, en variante, le ou les réglages comprennent la division du trajet opérationnel au niveau de l'emplacement de l'obstacle (O) en une section pré-obstacle et une section post-obstacle ; dans lequel, en variante, le ou les réglages comprennent la détermination d'un trajet opérationnel d'obstacle entre la section pré-obstacle et les sections post-obstacle du trajet opérationnel.

4. Dispositif de commande (1) selon l'une quelconque des revendications précédentes, configuré de manière à classer le au moins un obstacle (O) en fonction d'un ou de plusieurs critères parmi : la taille de l'obstacle ou des obstacles ; la forme de l'obstacle ou des obstacles ; et une dimension relative par rapport à la direction de déplacement de la machine agricole (50) en fonction du modèle de base pour le trajet opérationnel.

5. Dispositif de commande (1) selon l'une quelconque des revendications précédentes, configuré de manière à déterminer une taille du au moins un obstacle (O) dans une direction sensiblement perpendiculaire à une direction de déplacement de la machine (50) fonctionnant selon le modèle de base pour le trajet opérationnel ; dans lequel, en variante, le dispositif de commande (1) est configuré de manière à déterminer un trajet opérationnel ajusté pour la machine (50) qui contourne l'obstacle (O) en fonction du fait que la taille déterminée est inférieure à un paramètre de seuil.

6. Dispositif de commande (1) selon la revendication 5, configuré de manière à déterminer un trajet de contournement additionnel autour de l'obstacle (O) en fonction du fait que la taille déterminée est supérieure à un paramètre de seuil.

7. Dispositif de commande (1) selon l'une quelconque des revendications précédentes, configuré de manière à déterminer une boîte de délimitation autour de l'obstacle ou de chaque obstacle (O) définissant une ou plusieurs zones de l'environnement de travail qui ne doivent pas être traversées par la machine agricole (50).

8. Dispositif de commande (1) selon l'une quelconque des revendications précédentes, dans lequel le trajet de contournement d'obstacle comprend un trajet de contournement d'obstacle interne et un trajet de contournement d'obstacle externe et le dispositif de commande (1) est configuré de manière à tronquer le trajet de contournement d'obstacle externe à l'emplacement de toute interception entre le trajet de contournement externe et un trajet de contournement associé à la limite (B).

9. Dispositif de commande (1) selon l'une quelconque des revendications précédentes, dans lequel la ou plusieurs caractéristiques d'un premier obstacle (O) comprennent une distance entre le premier obstacle et un ou plusieurs autres obstacles à l'intérieur de l'environnement de travail.

10. Dispositif de commande (1) selon la revendication 9, configuré de manière à comparer la distance entre le premier obstacle (O) et les uns ou plusieurs autres obstacles avec une distance de seuil, la distance de seuil dépendant d'une largeur de travail de la machine agricole (50).

11. Dispositif de commande (1) selon la revendication 10, configuré, en fonction du fait que la distance entre le premier obstacle (O) et le ou les autres obstacles est inférieure à la distance de seuil, de manière à fusionner le premier obstacle et le ou les autres obstacles ; et à déterminer le trajet opérationnel en fonction d'une ou plusieurs caractéristiques de l'obstacle fusionné.

12. Dispositif de commande (1) selon la revendication 10 ou 11, configuré, en fonction du fait que la distance entre le premier obstacle et le ou les autres obstacles est supérieure à la distance de seuil mais inférieure au double de la distance de seuil, de manière à définir un premier trajet de contournement d'obstacle autour du premier obstacle et/ou un autre trajet de contournement d'obstacle autour des autres obstacles qui sont tronqués afin de réduire le recouvrement entre le premier trajet de contournement d'obstacle et l'autre trajet de contournement d'obstacle.

13. Dispositif de commande (1) selon l'une quelconque des revendications précédentes, configuré de manière à :
rechercher des données d'obstacle représentatives des une ou plusieurs caractéristiques de l'obstacle à partir d'une base de données comprenant des informations cartographiées de l'environnement de travail ; et/ou
recevoir des données d'obstacle à partir d'un dispositif de détection associé à la machine et/ou à une ou plusieurs machines supplémentaires fonctionnant à l'intérieur de l'environnement de travail ;
et
à déterminer la ou les caractéristiques du au moins un obstacle (O) en fonction de ces dernières.

14. Dispositif de commande (1) selon l'une quelconque des revendications précédentes, configuré de manière à présenter le trajet opérationnel déterminé à un opérateur de la machine agricole (50) ; dans lequel le trajet opérationnel déterminé est présenté :
sur un écran d'affichage (32) associé à la machine ; et/ou
sur un dispositif distant.

15. Dispositif de commande (1) selon l'une quelconque des revendications précédentes, dans lequel le ou les composants opérationnels associés à la machine agricole comprennent un dispositif de direction et/ou un dispositif de propulsion de la machine de manière à assurer le déplacement automatique de la machine le long du trajet opérationnel déterminé.
